# FASCICULE DE BREVET EUROPEEN

(11) **EP 0 324 686 B1**
(45) Date de publication et mention de la délivrance du brevet: **28.07.1993**
(21) Numéro de dépôt: 89400081.9
(22) Date de dépôt: 11.01.1989
(51) Int. Cl.: A47J 31/057, A47J 31/44

(54) **Cafetière électrique dont la carrosserie extérieure est moulée en matière plastique et procédé s'y rapportant**
Elektrische Kaffeemaschine, deren Aussengehäuse aus Kunststoff gegossen ist und Verfahren zur Herstellung des Gehäuses
Case made of moulded plastics for an electric coffee machine, and method for producing such a case

(30) Priorité: 13.01.1988 FR 8800309
(43) Date de publication de la demande: 19.07.1989
(73) Titulaire: SEB S.A., F-21260 Selongey (FR)
(72) Inventeur: Larrieu, Pierre, F-64230 Lescar (FR)
(74) Mandataire: Keib, Gérard

(56) Documents cités:
- DE-A- 3 312 435

## Description

La présente invention concerne une cafetière électrique selon le préambule de la revendication 1, donc une telle cafetière dont la carrosserie extérieure comporte un corps central qui contient un réservoir d'eau, ce corps comportant à sa partie inférieure un socle et à sa partie supérieure un couvercle pour fermer le réservoir d'eau. Une telle cafetière est exposée dans DE-A-3312435.

L'invention vise également le procédé de montage de cette cafetière.

Dans ce type de cafetière, la carrosserie est généralement moulée en matière plastique et composée de plusieurs parties distinctes qui sont assemblées ensemble après moulage.

Les cafetières connues présentent généralement un socle qui déborde latéralement d'un côté du corps central. Ce socle renferme une chaudière électrique destinée à chauffer l'eau. Cette chaudière chauffe également une plaque située à la surface supérieure du socle qui sert ainsi à maintenir au chaud le café collecté dans une verseuse qui est placée sur le socle.

Le couvercle ferme la partie supérieure du réservoir d'eau. Il recouvre également la tubulure d'eau qui amène l'eau chaude de la chaudière et dont l'extrémité débouche au-dessus du filtre qui contient la mouture de café et qui est placé sur la verseuse.

Etant donné que la carrosserie en matière plastique des cafetières électriques connues est réalisée en de nombreuses parties distinctes, moulées séparément, une telle carrosserie est onéreuse à fabriquer et à monter.

Les coûts élevés de fabrication des carrosseries de cafetière sont dus notamment aux problèmes posés par l'assemblage de pièces différentes pour lesquelles des cotes précises doivent être respectées. De telles cotes précises sont difficiles à obtenir lors de la production en grande série de pièces en matière plastique.

Le but de la présente invention est de remédier aux inconvénients des réalisations connues en créant une cafetière plus économique à fabriquer et à monter, sans pour autant affecter son esthétique.

Suivant l'invention, cette cafetière est caractérisée selon la revendication 1. L'ensemble de la carrosserie extérieure est donc moulée d'une seule pièce en matière plastique, le couvercle étant articulé au bord supérieur du corps central et le socle comportant un fond articulé à celui-ci, les articulations du couvercle et du fond étant constituées par des zones de liaison amincies en matière plastique moulées en même temps que le reste de la carrosserie.

Etant donné que l'ensemble de la carrosserie à savoir le corps central, le couvercle, le socle et le fond de celui-ci, y compris les articulations de ce couvercle et de ce fond sont moulés d'une seule pièce, la fabrication et le montage de cette carrosserie sont économiques et aisés.

Selon une version avantageuse de l'invention, le socle déborde latéralement du corps central et comporte une ouverture sur sa face supérieure, le fond du socle est articulé au bord inférieur du corps central à l'opposé du côté duquel déborde le socle et le bord inférieur du socle est situé dans un plan sur lequel vient s'appliquer le bord plan du fond.

Selon une version préférée de l'invention, le socle et le fond comprennent des moyens de fixation qui coopèrent par encliquetage pour assurer une fixation indémontable par l'usager du fond sur le socle après rabattement de ce fond sur le socle.

De préférence, le couvercle déborde latéralement du corps central du même côté que le socle et est articulé au bord supérieur du corps central à l'opposé du côté duquel déborde le socle.

D'autres particularités et avantages de l'invention apparaîtront encore dans la description ci-après.

Aux dessins annexés donnés à titre d'exemples non limitatifs :
- la figure 1 est une vue en coupe longitudinale de la carrosserie d'une cafetière telle qu'elle se présente à la sortie du moule de fabrication,
- la figure 2 est une vue schématique en élévation et en coupe longitudinale illustrant le procédé de fabrication de la carrosserie précitée,
- la figure 3 est une autre vue schématique en élévation et en coupe longitudinale illustrant le procédé de fabrication,
- la figure 4 est une vue en élévation de la cafetière terminée,
- la figure 5 est une vue en plan de dessous de la cafetière,
- la figure 6 est une vue en plan de dessus de la cafetière.

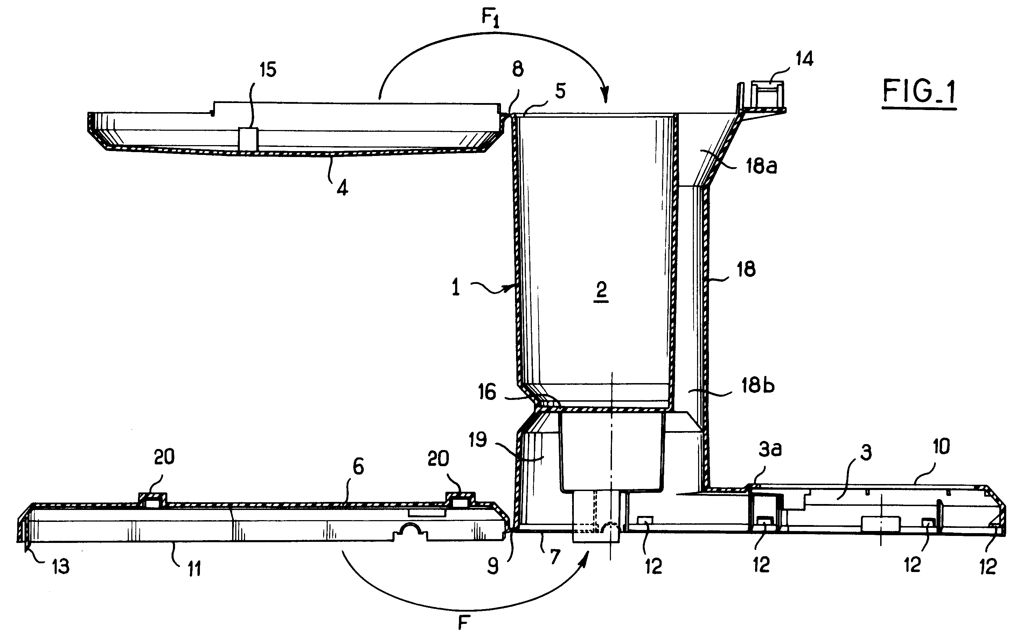

Dans la réalisation représentée sur la figure 1, la carrosserie extérieure de la cafetière électrique comporte un corps central 1 qui contient un réservoir d'eau 2. Ce corps central 1 comporte à sa partie inférieure un socle 3 et à sa partie supérieure un couvercle 4 pour fermer le réservoir d'eau.

Conformément à l'invention, l'ensemble de la carrosserie extérieure est moulée d'une seule pièce en matière plastique, par exemple injectée telle que du polypropylène. Le couvercle 4 est articulé au bord supérieur 5 du corps central 1 et le socle 3 comporte un fond 6 articulé au bord inférieur 7 de ce socle. Les articulations du couvercle 4 et du fond 6 sont constituées par des zones de liaison amincies 8, 9 en matière plastique moulées en même temps que le reste de la carrosserie.

Dans l'exemple représenté, le socle 3 déborde latéralement du corps central 1 et comporte une ouverture 10 sur sa face supérieure 3a. Cette ouverture 10 correspond à l'emplacement de la plaque chauffante de la chaudière à eau destinée à être placée dans le socle 3.

Le fond 6 du socle 3 est articulé au bord inférieur 7 du corps central à l'opposé du côté duquel déborde le socle 3.

Le bord inférieur 7 du socle 3 est situé dans un plan sur lequel vient s'appliquer le bord plan 11 du fond 6.

On voit d'autre part que le socle 3 et le fond 6 comprennent des moyens de fixation 12, 13 qui coopèrent par encliquetage pour assurer une fixation indémontable par l'usager du fond 6 sur le socle 3 après rabattement de ce fond sur le socle suivant la flèche F. Le démontage reste cependant possible en vue d'une réparation.

Les moyens de fixation sont par exemple constitués par des becs, tels que 13 pouvant s'encliqueter dans des ouvertures telles que 12. Le démontage n'est possible que si tous les becs sont repoussés en même temps.

On voit en outre sur la figure 1, que le couvercle 4 est articulé au bord supérieur 5 du corps central 1 à l'opposé du côté duquel déborde le socle 3. Ainsi, après rabattement du couvercle 4 vers le réservoir 2 (voir flèche F₁), ce couvercle 4 déborde latéralement du même côté que le socle 3. Le bord supérieur 5 du corps central 1 comporte à l'opposé de la charnière 8 du couvercle 4 un moyen de fixation 14 qui coopère par encliquetage avec un moyen complémentaire 15 prévus dans le couvercle 4. Ces moyens 14, 15 assurent une fixation réversible du couvercle 4 sur le réservoir 4, de façon que l'utilisateur puisse ouvrir et fermer de nombreuses fois ce couvercle.

Ces moyens de fixation 14, 15 peuvent être constitués par une languette flexible 15 munie d'un bec pouvant s'encliqueter sous un autre bec 14.

Les moyens de fixation 12, 13, 14 et 15 sont également moulés d'une seule pièce avec la carrosserie de la cafetière.

Dans la réalisation montrée à la figure 1, le corps central 1 comporte en son intérieur une cloison 16 s'étendant sensiblement parallèlement au socle 3 et constituant le fond du réservoir d'eau 2.

Par ailleurs, le corps central 1 comporte un conduit 18 s'étendant à côté du réservoir d'eau 2 sur toute la hauteur du corps central 1. Ce conduit 18 est ouvert à ses extrémités supérieure et inférieure. Il est destiné à contenir la tubulure qui amène l'eau chaude vers la verseuse à partir de la chaudière située dans le socle.

Comme le montre également la figure 1, à la sortie du moule servant à mouler la carrosserie, le couvercle 4 s'étend sur le côté du corps central 1 sensiblement dans le prolongement du bord supérieur 5 de celui-ci et le fond 6 du socle 3 s'étend sur le même côté du corps central 1 sensiblement dans le prolongement et à l'opposé du socle 3.

D'autre part, le réservoir d'eau 2 présente une forme légèrement évasée (sensiblement tronconique) vers le bord supérieur 5 du corps central. Le compartiment 19 du corps central 1 situé sous le fond 16 du réservoir 2 est légèrement évasé vers le bas. Le conduit 18 s'étendant à côté du réservoir d'eau 2 présente une partie supérieure 18a évasée vers le haut et une partie inférieure 18b évasée vers le bas. Le socle 3 et le fond 6 (dans sa position ouverte) sont évasés vers le bas et le couvercle 4 dans sa position ouverte, est évasé vers le haut.

Le couvercle 4, le socle 3 et le fond 6 présentent tous la forme d'une cuvette à fond sensiblement plat, ce fond étant raccordé à la paroi latérale légèrement évasée par une paroi tronconique.

Le fond 6 comporte en outre sur sa surface extérieure des plots 20 également moulés d'une seule pièce avec toute la carrosserie, servant de pieds pour la cafetière.

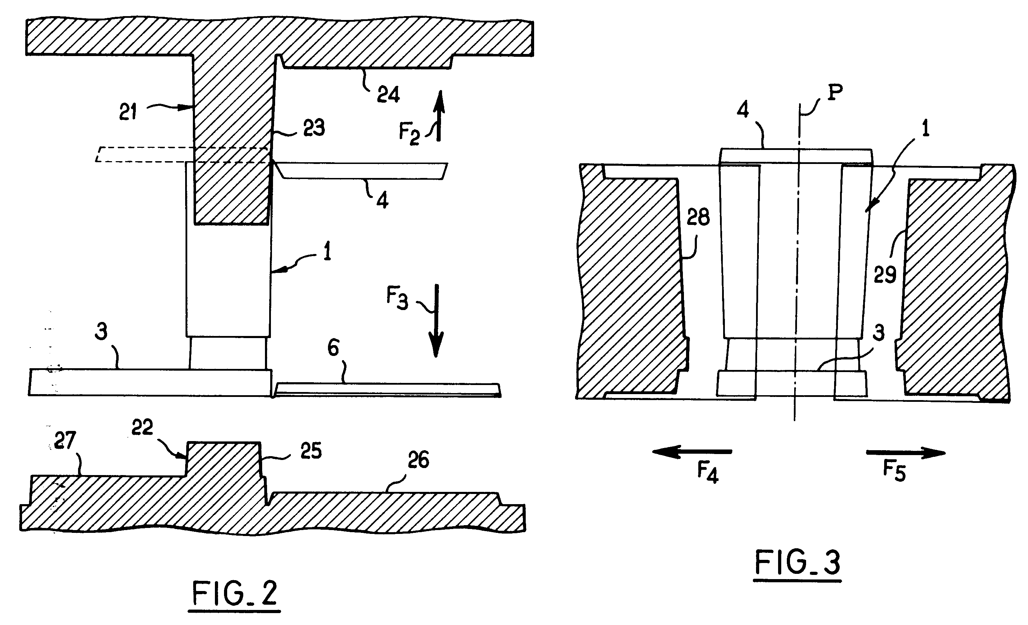

Les formes évasées des différentes parties de la carrosserie que l'on vient de décrire permettent effectivement le moulage d'une seule pièce de cette carrosserie, comme l'illustrent les figures 2 et 3.

La figure 2 montre en coupe longitudinale que l'intérieur de la carrosserie est moulé au moyen de deux noyaux de moule 21, 22 dont l'extraction est réalisée dans le sens des flèches F₂, F₃, dirigées en sens opposés dans l'axe du corps central 1.

Le noyau supérieur 21 comprend une surface centrale 23 épousant le profil intérieur du réservoir 2 et une surface 24 épousant le profil intérieur du couvercle 4. Pour simplifier la figure 2, on n'a pas représenté les surfaces permettant de mouler le conduit latéral 18 du corps 1 ni les moyens de fixation par encliquetage.

Le noyau inférieur 22 comporte une surface centrale 25 pour mouler l'intérieur du compartiment 19, une surface 26 pour mouler l'intérieur du fond 6 et une surface 27 pour mouler l'intérieur du socle 3.

Comme montré par la figure 3, l'extérieur de la carrosserie est moulé au moyen de deux coquilles 28, 29 s'ouvrant latéralement dans des directions opposées (voir flèches F₄, F₅) à partir d'un plan de joint P correspondant au plan de symétrie vertical de la carrosserie.

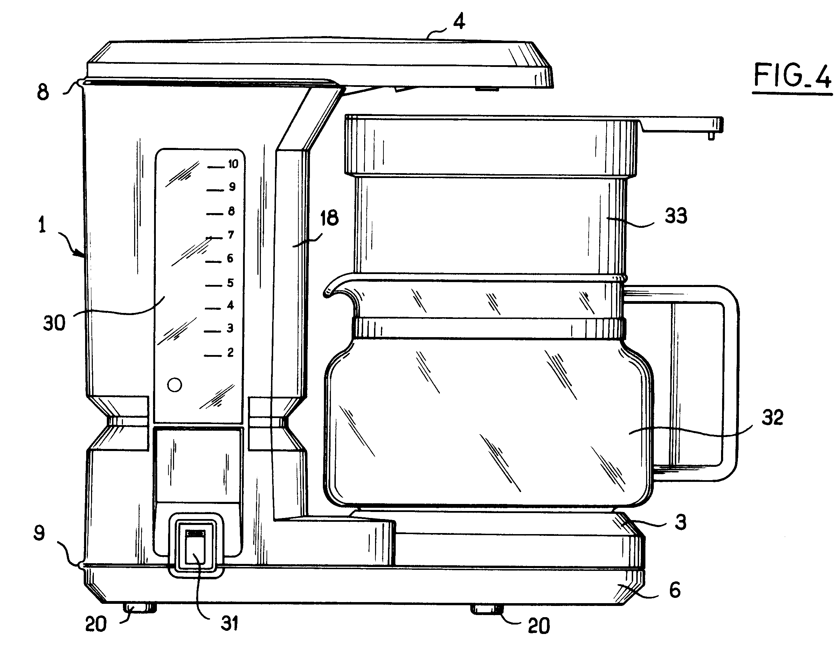

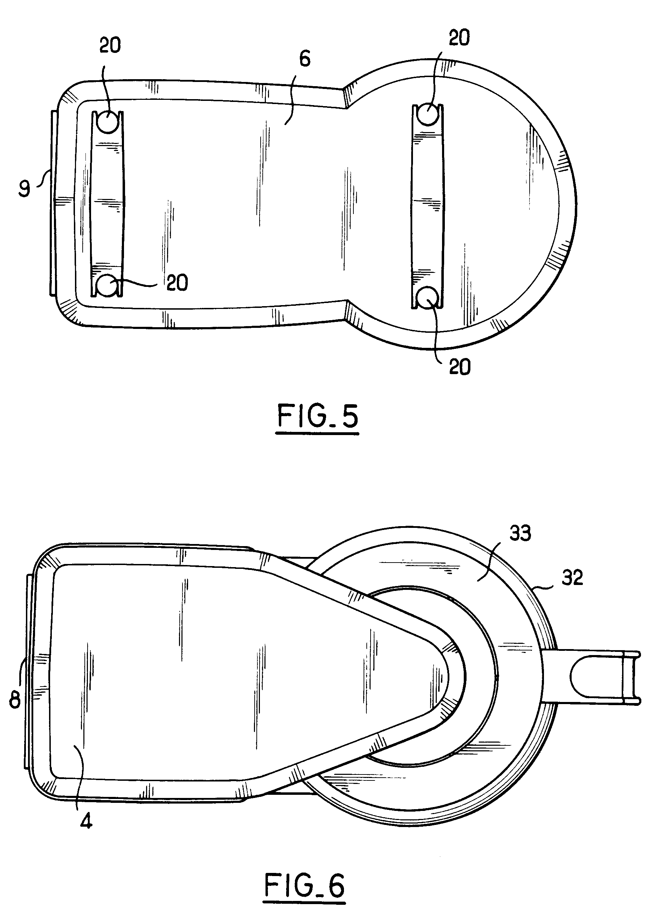

Les figures 4, 5 et 6 montrent la cafetière terminée, le fond 6 ayant été fixé par encliquetage au socle 3 et le couvercle 4 étant en position de fermeture sur le réservoir d'eau.

La carrosserie est équipée de tous ses accessoires intérieurs (chaudière, pompe thermique, organes de régulation de la température) et extérieurs (plaque transparente graduée 30 pour indiquer le niveau d'eau et le nombre désiré de tasses de café, bouton de commande 31, etc.)

La figure 4 montre également la verseuse 32 surmontée d'un dispositif de filtre 33, en position sur le socle 3.

La description que l'on vient de décrire montre que la carrosserie d'une cafetière électrique peut effectivement être moulée d'une seule pièce, à l'aide d'un moule unique.

Etant donné que la carrosserie est réalisée d'une seule pièce, son montage est particulièrement simple. Le coût de fabrication de cette carrosserie est ainsi notablement réduit par rapport à celui des réalisations connues.

Par ailleurs, la description ci-dessus et en particulier la figure 4 montrent que l'aspect esthétique de la carrosserie ne souffre nullement d'avoir été réalisée d'une seule pièce, bien au contraire, étant donné qu'elle présente un nombre réduit de joints d'assemblage, la finition de l'ensemble est d'une grande qualité.

D'autre part, étant donné que la carrosserie est d'une seule pièce, les problèmes posés par le montage de parties distinctes ayant des cotes qui ne correspondent pas exactement, sont supprimés.

Bien entendu, l'invention n'est pas limitée à l'exemple de réalisation que l'on vient de décrire et on peut apporter à celui-ci de nombreuses modifications sans sortir du cadre de l'invention.

Ainsi, les formes des différentes parties de la carrosserie de la cafetière peuvent être modifiées pourvu que celles-ci soient compatibles avec un moulage d'une seule pièce.

## Revendications

1. Cafetière électrique dont la carrosserie extérieure comporte un corps central creux (1) qui contient un réservoir d'eau, ce corps comportant à sa partie inférieure un socle (3) débordant latéralement du corps et servant d'appui pour maintenir la cafetière en position verticale, le corps comportant en outre à sa partie supérieure un couvercle (4) pour fermer le réservoir d'eau, le couvercle (4) étant articulé au bord supérieur (5) du corps central (1) et le socle (3) comportant à l'opposé du couvercle un fond (6) articulé audit socle (3), ledit couvercle (4) et ledit fond (6) étant reliés respectivement au bord supérieur (5) du corps et au bord inférieur (7) du socle par des zones de liaison amincies (8, 9) en matière plastique, caractérisée en ce que le corps central (1), le réservoir d'eau (2), le socle (3), le couvercle (4), le fond (6) du socle, et les zones de liaison (8, 9) constituant les articulations du couvercle et du fond sont moulées d'une seule pièce en matière plastique.

2. Cafetière conforme à la revendication 1, caractérisée en ce que le socle (3) comporte une ouverture (10) sur sa face supérieure.

3. Cafetière conforme à la revendication 1, caractérisée en ce que le fond (6) du socle (3) est articulé au bord inférieur (7) du corps central (1) à l'opposé du côté duquel déborde le socle (3).

4. Cafetière conforme à la revendication 3, caractérisée en ce que le bord inférieur (7) du socle (3) est situé dans un plan sur lequel vient s'appliquer le bord plan du fond (6).

5. Cafetière conforme à l'une des revendications 1 à 4, caractérisée en ce que le socle (3) et le fond (6) comprennent des moyens de fixation (12, 13) qui coopèrent par encliquetage pour assurer une fixation indémontable par l'usager du fond (6) sur le socle (3) après rabattement de ce fond sur le socle.

6. Cafetière conforme à l'une des revendications 1 à 5, caractérisée en ce que le couvercle (4) déborde latéralement du corps central (1) du même côté que le socle (3) et est articulé au bord supérieur (7) du corps central à l'opposé du côté duquel déborde le socle.

7. Cafetière conforme à la revendication 6, caractérisée en ce que le bord supérieur (5) du corps central (1) comporte à l'opposé de la charnière (8) du couvercle (4), des moyens de fixation (14) qui coopèrent par encliquetage avec des moyens complémentaires (15) prévus dans le couvercle (4), ces moyens assurant une fixation réversible.

8. Cafetière conforme à l'une des revendications 5 à 7, caractérisée en ce que lesdits moyens de fixation (12, 13, 14, 15) sont également moulés d'une seule pièce avec la carrosserie de la cafetière.

9. Cafetière conforme à l'une des revendications 1 à 8, caractérisée en ce que le corps central (1) comporte en son intérieur une cloison (16) s'étendant sensiblement parallèlement au socle (3) et constituant le fond du réservoir d'eau (2).

10. Cafetière conforme à l'une des revendications 1 à 9, caractérisée en ce que le corps central (1) comporte un conduit (18) s'étendant à côté du réservoir d'eau (2) sur toute la hauteur du corps central et étant ouvert à ses extrémités supérieure et inférieure.

11. Cafetière conforme à l'une des revendications 1 à 10, caractérisée en ce qu'à la sortie du moule servant à mouler la carrosserie, le couvercle (4) s'étend sur le côté du corps central (1) sensiblement dans le prolongement du bord supérieur (5) de celui-ci, le fond (6) du socle (3) s'étend sur le même côté du corps central (1) sensiblement dans le prolongement et à l'opposé du socle (3).

12. Cafetière conforme à l'une des revendications 9 à 11, caractérisée en ce que le réservoir d'eau (2) présente une forme légèrement évasée vers le bord supérieur (5) du corps central (1), le compartiment (19) du corps central situé sous le fond (16) du réservoir est légèrement évasé vers le bas, le conduit (18) s'étendant à côté du réservoir d'eau présente une partie supérieure (18a) évasée vers le haut et une partie inférieure (18b) évasée vers le bas, le socle (3) et le fond (6), dans sa position ouverte, sont évasés vers le bas et le couvercle (4), dans sa position ouverte, est évasé vers la haut.

13. Procédé de montage de la cafetière conforme à la revendication 11, caractérisé en ce qu'on rabat le couvercle (4) sur le bord supérieur (5) du corps central et on rabat le fond (6) sur le bord inférieur (7) du socle (3).

## Claims

1. An electric coffee-making machine having an outer body comprising a hollow central member (1) containing a water vessel, the bottom part of the member comprising a stand (3) which projects sideways from the member and serves as a support for holding the coffee-making machine in a vertical position, the top of the member comprising a lid (4) for closing the water vessel, the lid (4) being articulated to the top edge (5) of the central member (1) and the stand (3) being articulated to a base (6) opposite the lid, the lid (4) being connected to the top edge (5) of the member and the base (6) being connected to the bottom edge (7) of the stand by respective reduced-thickness connecting areas (8, 9) of plastics, characterised in that the central member (1), the water vessel (2), the stand (3), the lid (4), the base (6) of the stand and the connecting regions (8, 9) forming the articulations of the lid and the base are moulded in one piece from plastics.

2. A coffee-making machine according to claim 1, characterised in that the stand (3) has an opening (10) on its upper surface.

3. A coffee-making machine according to claim 1, characterised in that the base (6) of the stand (3) is articulated to the bottom edge (7) of the central body (1) on the opposite side from that from which the stand (3) projects.

4. A coffee-making machine according to claim 3, characterised in that the bottom edge (7) of the stand (3) is situated in a plane against which the flat edge of the base (6) bears.

5. A coffee-making machine according to any of claims 1 to 4, characterised in that the stand (3) and the base (6) comprise securing means (12, 13) which co-operate by snap engagement to provide non-detachable fixing of the base (6) on the stand (3) by the user after the base has been folded over on to the stand.

6. A coffee-making machine according to any of claims 1 to 5, characterised in that the lid (4) projects laterally from the central member (1) on the same side as the stand (3) and is articulated to the top edge (7) of the central member remotely from the side from which the stand projects.

7. A coffee-making machine according to claim 6, characterised in that the top edge (5) of the central member (1) comprises securing means (14) remotely situated from the hinge (8) of the lid (4), the means co-operating by snap engagement with complementary means (15) provided in the lid (4) for the purpose of reversible fixing.

8. A coffee-making machine according to any of claims 5 to 7, characterised in that the securing means (12, 13, 14, 15) are also moulded in one piece with the body of the coffee-making machine.

9. A coffee-making machine according to any of claims 1 to 8, characterised in that the central member (1) has in its interior a partition (16) extending substantially parallel to the stand (3) and forming the base of the water vessel (2).

10. A coffee-making machine according to any of claims 1 to 9, characterised in that the central member (1) has a duct (18) extending alongside the water vessel (2) all the way up the central member and open at its top and bottom ends.

11. A coffee-making machine according to any of claims 1 to 10, characterised in that on leaving the mould used for moulding the body, the lid (4) extends on the side of the central member (1) substantially in extension of the top edge (5) thereof, and the base (6) of the stand (3) extends on the same side of the central member (1) substantially in extension of and in the opposite direction to the stand (3).

12. A coffee-making machine according to any of claims 9 to 11, characterised in that the water vessel (2) has a shape which flares slightly towards the top edge (5) of the central member (1), the compartment (19) in the central member situated underneath the base (16) of the vessel flares slightly downwards, the duct (18) extending alongside the water vessel has a top part (18a) which flares upwards and a bottom part (18b) which flares downwards, the stand (3) and the base (6), in its open position, flare downwards and the lid (4) in its open position flares upwards.

13. A method of assembling the coffee-making machine according to claim 11, characterised in that the lid (4) is folded on to the top edge (5) of the central member and the base (6) is folded on to the bottom edge (7) of the stand (3).

## Patentansprüche

1. Elektrische Kaffeemaschine, deren äußeres Gehäuse einen zentralen, hohlen Körper (1) aufweist, der einen Wasserbehälter enthält, wobei der Körper an seinem unteren Teil einen Sockel (3) aufweist, der seitlich von dem Körper hervorragt und als Stütze dient, um die Kaffemaschine in vertikaler Position zu halten, wobei der Körper ferner an seinem oberen Teil einen Deckel (4) zum Verschließen der Wasserbehälters aufweist, wobei der Deckel (4) an den oberen Rand (5) des zentralen Körpers (1) angelenkt ist und der Sockel (3) dem Deckel entgegengesetzt einen an den Sockel (3) angelenkten Boden (6) aufweist, wobei der Dunkel (4) und der Boden (6) durch verdünnte Verbindungsszonen (8, 9) aus Kunststoff an den oberen Rand (5) des Körpers bzw. an den unteren Rand (7) des Sockels angelenkt sind, dadurch gekennzeichnet, daß der zentrale Körper (1), der Wasserbehälter (2), der Sockel (3), der Deckel (4), der Boden (6) des Sockels und die die Gelenke des Deckels und des Bodens bildenden Verbindungszonen (8, 9) in einem einzigen Stück aus Kunststoff geformt sind.

2. Kaffeemaschine nach Anspruch 1, dadurch gekennzeichnet, daß dem Sockel (3) an seiner Oberseite eine Öffnung (10) aufweist.

3. Kaffeemaschine nach Anspruch 1, dadurch gekennzeichnet, daß der Boden (6) des Sockels (3) an den der Seite entgegengesetzten unteren Rand (7) des zentralen Körpers (1) angelenkt ist, von der der Sockel (3) hervorragt.

4. Kaffeemaschine nach Anspruch 3, dadurch gekennzeichnet, daß der untere Rand (7) des Sockels (3) in einer Ebene liegt, in der der Flache Rand des Bodens (6) befestigt wird.

5. Kaffeemaschine nach einem der Ansprüche 1 bis 4, dadurch gekennzeichnet, daß der Sockel (3) und der Boden (6) Befestigungsmittel (12, 13) aufweisen, die einrastend zusammenwirken, um nach dem Umschlagen des Bodens (6) auf den Sockel (3) eine durch den Benutzer nicht zu lösende Befestigung des Bodens an dem Sockel sicherzustellen.

6. Kaffeemaschine nach einem der Ansprüche 1 bis 5, dadurch gekennzeichnet, daß der Deckel (4) an der gleichen Seite wie der Sockel (3) seitlich von dem zentralen Körper (1) herverragt und an dem der Seite entgegangesetzten oberen Rand (7) des zentralen Körpers angelankt ist von der der Sockel hervorragt.

7. Kaffeemaschine nach Anspruch 6, dadurch gekennzeichnet, daß der obere Rand (5) des zentralen Körpers (1) dem Soharnier (8) des Deckels (4) entgegengesetzt Befestigungsmittel (14) aufweist, die einrastend mit komplementären, in dem Deckel (4) vorgesehenen Mitteln (15) zusammenwirken, wobei diese Mittel eine lösbare Befestigung sicherstellen.

8. Kaffeemaschine nach einem der Ansprüche 5 bis 7, dadurch gekennzeichnet, daß auch die Befestigungsmittel (12, 13, 14, 15) in einem Stück mit dem Gehäuse der Kaffeemaschine geformt sind.

9. Kaffeemaschine nach einem der Ansprüche 1 bis 8, dadurch gekennzeichnet, daß der zentrale Körper (1) in seinem Inneren eine Trennwand (16) aufweist, die eich im wesentlichen parallel zu dem Bockel (3) oratreckt und den Boden des Wasserbehälters (2) bildet.

10. Kaffeemaschine nach einem der Ansprüche 1 bis 9, dadurch gekennzeichnet, daß der zentrale Körper (1) einen Kanal (18) aufweist, der sich über die gesamte Höhe des zentralen Körpara neben dem Wasserbehälter (2) erstreckt und an seinem oberen und unteren Ende offen ist.

11. Kaffeemaschine nach einem der Ansprüche 1 bis 10, dadurch gekennzeichnet, daß sich der Deckel (4) heim Austritt aus der zum Formen des Gehäuses dienenden Form an der Seite des zentralen Körpers (1) im wesentlichen in der Verlängerung dessen oberen Randes (5) erstreckt, daß sich der Boden (6) des Sockels (3) an der gleichen Seite des zentralen Körpers (1) im wesentlichen in der Verlängerung des Sockels (3) und entgegengesetzt zu diesem erstreckt.

12. Kaffeemaschine nach einem der Ansprüche 9 bis 11, dadurch gekennzeichnet, daß der Wasserbehälter (2) eine zu dem oberen Rand (5) des zentralen Körpers (1) hin leicht aufgeweitete Form aufweist, daß daß unter dem Boden (16) des Behälters befindliche Abteil (19) des zentralen Körpers leicht nach unten aufgeweitet ist, daß der neben dem Wasserbehälter verlaufende Kanal (18) einen nach oben aufgeweiteten oberen Teil (18a) und einen nach unten aufgeweiteten unteren Teil. (18b) aufweist, daß der Sockel (3) und der Boden (6) in der geöffneten Position nach unten aufgeweitet sind und der Deckel (4) in der geöffneten Position nach oben aufgeweitet ist.

13. Verfahren zum Zusammenbau der Kaffemaschine nach Anspruch 11, dadurch gekennnzeichnet, daß der Deckel (4) auf den oberen Rand (5) des zentralen Körpers umgeschlagen wird, und daß der Boden (6) auf den unteren Rand (7) des Sockels (3) umgeschlagen wird.
